# EUROPEAN PATENT APPLICATION

(11) **EP 4 397 621 A1**
(43) Date of publication of application: **10.07.2024**
(21) Application number: 22864429.0
(22) Date of filing: 26.08.2022
(51) Int. Cl.: C01B 33/113, H01M 4/36, H01M 4/48

(54) **SILICON MONOXIDE POWDER, AND NEGATIVE ELECTRODE ACTIVE MATERIAL FOR LITHIUM ION SECONDARY BATTERY**

(30) Priority: 02.09.2021 JP 2021143428
(71) Applicant: SHIN-ETSU CHEMICAL CO., LTD., Tokyo 1000005 (JP)
(72) Inventor: OHASHI, Ken, Tokyo 100-0005 (JP); TANAKA, Shuji, Joetsu-shi, Niigata 942-8601 (JP); FUKUOKA, Hirofumi, Annaka-shi, Gunma 379-0125 (JP)
(74) Representative: Sonnenhauser, Thomas Martin
(86) International application number: PCT/JP2022/032209
(87) International publication number: WO 2023/032845

(57) **Abstract**

The present invention provides a silicon monoxide powder including silicon monoxide, in which in an X-ray diffraction spectrum of the silicon monoxide powder measured by X-ray diffraction by using a Cu-Kα ray, broad peaks due to an amorphous phase are near 2Θ = 22° and near 2Θ = 50°, and a peak due to a crystal phase of silicon is not near 2Θ = 28°. Thus, the silicon monoxide powder in an amorphous state with a low disproportional rate is provided.

## Description

### TECHNICAL FIELD

The present invention relates to a silicon monoxide powder and negative electrode active material for a lithium-ion secondary battery.

### BACKGROUND ART

For producing silicon monoxide (hereinafter, also referred to as "SiO") in a conventionally well-known manner, a metal silicon powder (hereinafter, also referred to as "Si" or "Si powder") and a silica powder (hereinafter, also referred to as SiO₂ or SiO₂ powder) are bought into contact, thereby causing a reaction by maintaining the temperature at 1200°C or more, more specifically in the range around 1500°C, to sublimate SiO. Such a solid-phase reaction sublimation method has been known since long ago, and many patent applications have been filed (Patent Documents 1 to 7). Because there is no liquid phase of SiO, SiO is directly sublimated by a contact reaction between powders to become SiO gas, basically without passing through a liquid phase. The SiO gas is deposited onto a deposition plate or the like, cooled, and then solidified to become bulk SiO. For producing SiO gas, it is necessary to increase contact points between Si and SiO₂ powders. Fine powders are mixed with each other, granulated or made into a pressurized powder body in some way for increasing the contact points, thereby promoting the reaction. The reaction temperature is preferably high, but if it is too high, metal silicon Si is melted, and retention of the liquid is difficult. It is effective to strongly pressure the powders for increasing the contact points between the powders, but both Si and SiO₂ are ceramics and not deformable, and thus there is a limit. For increasing the contact points between the SiO₂ powder and Si powder, it is effective to finely pulverize the powders. However, for obtaining fine powders with a size of µm-order, for example, cost is required for a device and energy. Additionally, if the Si powder is excessively fine, the powder surface is easily oxidized, and a risk of dust explosion increases. Therefore, there is also a limit in pulverization. In the conventional solid phase contact method, there is a limit for increasing the reaction temperature or increasing the powder contact points. Thus, speed of producing SiO has been limited.

Meanwhile, it is known that when SiO₂ is reduced, metal silicon Si is produced via SiO (Non Patent Document 1). In a reduction furnace of SiO₂, for example, a reducing reaction is thought to proceed in the order of elementary processes (1) to (3) as described below.
(1)

   SiO₂+C → SiO+CO
(2)

   SiO+C → Si+CO
(3)

   SiO₂+2C → Si+2CO

It is desirable to take out only SiO by stopping the reaction at the process (1) in C reduction of SiO₂. However, the processes (1) to (3) continuously occur in the reduction furnace, in which produced SiO gas is immediately subjected to the reaction of (2) in molten metal, and melt Si is produced. It is difficult to take out only SiO by stopping the reaction in the process (1). Although it is principally possible to take out SiO gas by inserting a high-temperature resistant pipe or the like to the reduction furnace in the process (1), such an attempt has never been carried out.

As described above, a more efficient production method of SiO than the conventional solid phase contact method or SiO produced by such an efficient method has not been known.

Meanwhile, the prior art documents described below, for example, disclose methods of producing fine SiO₂, a composite oxide of fine SiO₂ and another oxide, and the like, by explosion combustion of Si and O₂ (Patent Documents 8 and 9). In Patent Document 9, for example, it is contrived that "a metal silicon powder is supplied to an air stream containing oxygen, and combusted, thereby forming a silicon dioxide powder having an average particle size of 0.01 to 10 um". Thus, a production method for fine SiO₂ powder is already known.

### CITATION LIST

### PATENT LITERATURE

Patent Document 1: JP 2001-220123 A
Patent Document 2: JP 2001-220122 A
Patent Document 3: JP 2001-220125 A
Patent Document 4: JP 2002-373653 A
Patent Document 5: JP H06-325765 A
Patent Document 6: JP 2015-149171 A
Patent Document 7: WO 2014/188851 A1
Patent Document 8: JP H03-170319 A
Patent Document 9: JP 2003-221218 A
Patent Document 10: JP H04-79975 B2
Patent Document 11: JP H05-36363 B2

### NON PATENT LITERATURE

Non Patent Document 1: Journal of the Japan Institute of Metals and Materials. 1988, 52(10), pp. 945-953

### SUMMARY OF INVENTION

### TECHNICAL PROBLEM

From the above prior art documents, it is already known that production of SiO₂ has been attempted with a controlled explosive oxidation combustion reaction of a Si powder and an O₂ gas. However, it is not clear whether it is possible to produce SiO by a production method of the controlled explosive oxidation combustion reaction. Production of SiO, and production of SiNₓ via SiO by an explosion combustion method are also applied (Patent Documents 10 and 11). However, the conditions are not specifically described, and details of the inventions are unclear. More specifically, because the explosive oxidation reaction occurs instantly, whether the reaction can be halted at a step in which SiO is produced has not been known. Patent Document 10 discloses production of SiO in a plasma jet, and such production is completely different from a production reaction in a flame containing O₂. Patent Document 11 discloses continuous production of SiO and SiNₓ, in which SiO is produced by oxidation in a flame and SiNₓ is subsequently produced by nitridation in the flame. It is not known whether only SiO can be taken out by the oxidation in a flame.

In particular, the application of the SiO powder for negative electrode active material for a lithium-ion secondary battery (LIB) requires the SiO powder in an amorphous state with a low disproportional rate.

The present invention has been made in view of the above-described problem. An object of the present invention is to provide a silicon monoxide powder in an amorphous state with a low disproportional rate.

### SOLUTION TO PROBLEM

To achieve the object described above, the present invention provides a silicon monoxide (SiO) powder comprising silicon monoxide (SiO), wherein
in an X-ray diffraction spectrum of the silicon monoxide (SiO) powder measured by X-ray diffraction by using a Cu-Kα ray,
broad peaks due to an amorphous state are near 2Θ = 22° and near 2Θ = 50°, and
a peak due to a crystal phase of silicon is not near 2Θ = 28°.

Such a SiO powder is the SiO powder in an amorphous state with a low disproportional rate.

At this time, "x" is preferably in the range of 0.8 ≤ X ≤ 1.2 when the silicon monoxide (SiO) is represented by the composition formula of SiOₓ.

Within this range of Si and O composition ratio, the SiO powder can be made to have excellent characteristics.

In addition, the silicon monoxide (SiO) powder is preferably produced by oxidizing a metal silicon (Si) powder as a raw material by using the reaction heat of oxygen gas with a flammable gas in an air stream as an energy source.

Such a production method can easily obtain the SiO powder with high productivity, in which the SiO powder is in the amorphous state and has the low disproportionation ratio as described above.

Moreover, the present invention provides a negative electrode active material for a lithium-ion secondary battery, wherein
the silicon monoxide powder is coated with a conductive film on a surface.

Such negative electrode active material has excellent characteristics as the negative electrode active material for the lithium-ion secondary battery because the conductive film is formed thereon.

In further this case, the silicon monoxide (SiO) powder is preferably doped with lithium.

Such negative electrode active material can improve an initial efficiency.

Moreover, the present invention provides a negative electrode for a lithium-ion secondary battery comprising the negative electrode active material for the lithium-ion secondary battery.

Furthermore, the present invention applies a lithium-ion secondary battery comprising:
the negative electrode for the lithium-ion secondary battery;
a positive electrode;
a non-aqueous electrolyte; and
a separator.

The negative electrode and the lithium-ion secondary battery using the inventive SiO powder can have excellent characteristics because the SiO powder is in the amorphous state and has a low disproportional rate.

### ADVANTAGEOUS EFFECTS OF INVENTION

The inventive SiO powder is in the amorphous state and has a low disproportional rate. In particular, the inventive SiO powder can preferably be used as a negative electrode active material for the lithium-ion secondary battery, in addition to glass, plastic coating, or other applications. Moreover, such a negative electrode material can be widely used as high-capacity negative electrode material in mobile devices such as a smartphone or a smart watch and a battery for electric automobiles.

### BRIEF DESCRIPTION OF DRAWINGS

FIG. 1 is an X-ray diffraction chart of a SiO powder according to the present invention and a SiO powder produced by a conventional method, respectively.
FIG. 2 is a view illustrating an example of a schematic cross-sectional view of a combustion device usable for producing a SiO powder according to the present invention.
FIG. 3 is an X-ray diffraction chart of a SiO powder according to the present invention and that of the SiO powder when heat-treated.
FIG. 4 is a cross-sectional TEM image of a powder in which a SiO powder according to the present invention is coated with a carbon film.
FIG .5 is a binary phase diagram of Si-O.
FIG .6 is a graph showing cycle characteristics of a negative electrode having a mixed negative electrode active material composed of a powder, in which a SiO powder according to the present invention is coated with a carbon film, and a graphite powder.
FIG. 7 is a graph showing charging and discharging characteristics using a negative electrode with a SiO powder according to the present invention as a negative electrode active material.
FIG. 8 is a graph showing the respective charging and discharging characteristics of a negative electrode in which a SiO powder according to the present invention is used as a negative electrode active material and a negative electrode in which graphite is used as a negative electrode active material.
FIG. 9 is a graph showing cycle characteristics of a negative electrode in which a SiO powder obtained by a conventional method for producing a SiO powder is used as a negative electrode active material.

### DESCRIPTION OF EMBODIMENTS

Hereinafter, embodiments of the present invention will be described. However, the present invention is not limited thereto.

The present invention is a silicon monoxide (SiO) powder including silicon monoxide (SiO), in which in an X-ray diffraction spectrum of the silicon monoxide (SiO) powder measured by X-ray diffraction by using a Cu-Kα ray, broad peaks due to an amorphous phase are near 2Θ = 22° and near 2Θ = 50°, and a peak due to a crystal phase of silicon is not near 2Θ = 28°. In particular, "x" is preferably in the range of 0.8≤X≤1.2 when the silicon monoxide (SiO) is represented by the composition formula of SiOₓ.

Such a silicon monoxide (SiO) can be produced by oxidizing a metal silicon (Si) powder as a raw material by using the reaction heat of oxygen gas with a flammable gas in an air stream as an energy source.

Specifically, the silicon monoxide powder (SiOx, in particular, SiO) is obtained by the oxidation reaction of a metal silicon powder (also referred to as "Si powder") with oxygen gas (hereinafter, O₂), meanwhile, SiO can be produced by controlling the oxidation reaction, using the heat generated by oxidation of a Si powder and the heat of a flammable gas combustion as the main energy. An elementary process of SiO production is not clearly revealed, and various routes are considered, such as "gasified → quenched and solidified," "fuse-liquefied → gasified → quenched and solidified," and "a mixture of liquefied silicon and gasified silicon → quenched and solidified." Regardless of the reaction routes, the produced SiO is in an amorphous state after quenching from the gaseous state and is suitable as a SiO negative electrode material for a lithium-ion secondary battery.

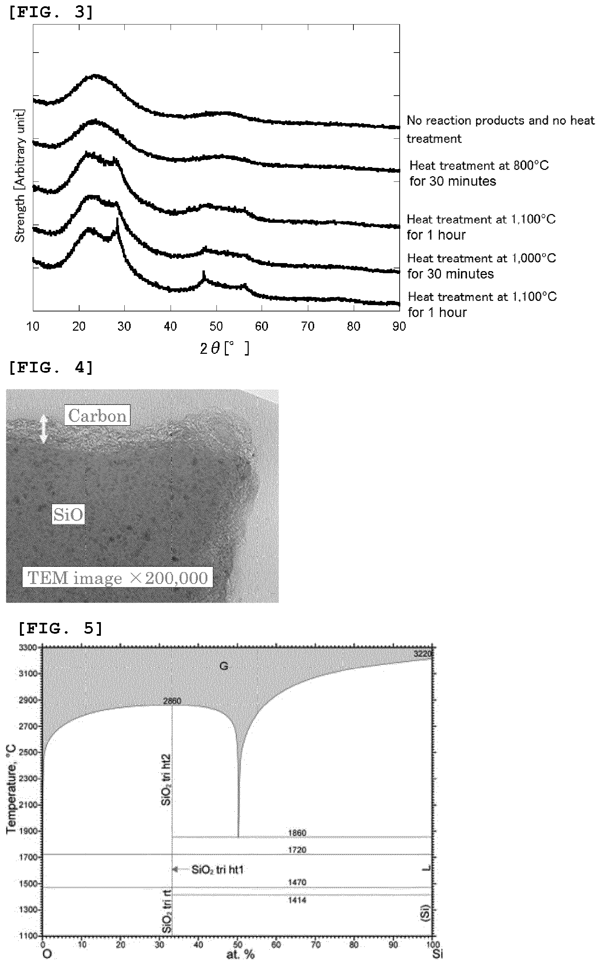

In the present invention, as already described above, the objective is to obtain SiO material in the amorphous state, and it is very important whether the SiO material can be produced by the oxidation reaction of Si powder in an air stream containing O2 gas or not. Thus, the possibility of production is studied in advance. FIG. 5 shows a binary phase diagram of Si-O. As can be seen from FIG. 5, a SiO gas phase penetrates down to 1,860°C at Si:O = 1:1. This temperature is a lower limit of the temperature for the SiO production. The following is a simple examination of whether it is possible to reach the SiO gas phase (min 1,860°C) only by heat generated by oxidation, which can be obtained with Si:O = 1:1 stoichiometric ratio. However, since the elementary process is unclear, a simplified assumption is made here: Si becomes the gas phase and then reacts with the O₂ gas to form the SiO gas (gasified temperature is assumed to be 1,900°C). Then, the enthalpy change is sought.

Si(c)+1/2O₂(g) → SiO(g) (Enthalpy Change/Heat Generated by Oxidation): -98.9 kJ/mol (1)

Si(c)+1/2O₂(g) → Si(g)+1/2O₂(g·1900°C) (Enthalpy Change/Heat Absorbed): 464.7 kJ/mol (2)

Note that (c) is the crystal phase, and (g) is the gas phase.

The source of the data for formula (1) is "Journal of the Industrial Explosives Society Japan", Vol. 48, No. 3, 1987, p. 151, and the source of the data for formula (2) is "Handbook of Chemistry: Pure Chemistry, 5th ed.", Maruzen Publishing, February 2004 (II-291 ~ II-300, "10.10 standard enthalpy of formation, standard entropy, and standard Gibbs energy of formation").

As described above, the heat absorption of Si(g) gasification, which is a prerequisite for the SiO gas production, is over four times larger than the heat generated by oxidation, Si(c)+1/2O₂(g) → SiO(g), and unbalanced. Consequently, heat generated by the oxidation of Si identical to SiO₂ production cannot be used as the main source to produce SiO. Therefore, in the present invention, while the SiO production is mainly heated by heat from such as flammable gas combustion, heat generated by oxidation of Si powder with controlled O₂ content is also added to the SiO production, and the oxidation reaction is controlled in the flame so as to make the production reaction stay in SiO.

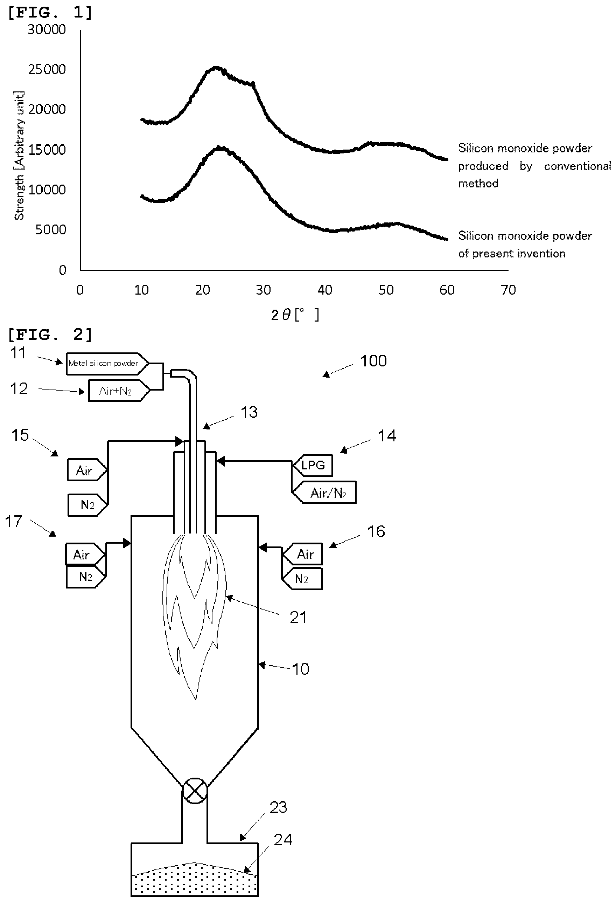

FIG. 2 shows an example of the combustion device (combustion reaction device) that is important for producing the inventive SiO powder. Needless to say, the combustion reaction device is not limited to the device shown in FIG. 2. A device capable of controlling a flame and combustion oxidation can produce the inventive SiO powder.

A production device 100 (combustion device) of silicon monoxide (SiO) powder has a combustion container 10. The combustion container 10 is connected with a supply means 11 for supplying the metal silicon (Si) powder and a first gas supply means 12 for supplying the first gas mixture containing an oxygen gas and an inert gas, via a burner 13. FIG. 2 shows a case where the first gas supply means 12 supplies of the first gas mixture obtained by adding a nitrogen gas (N₂ gas) to the air. In this case, a flow rate of the inert gas is adjusted by nitrogen and argon contained in the air, and the added nitrogen gas. Owing to these constituent elements, the Si powder serving as a raw material is supplied to the combustion device 100 (inside the combustion container 10 of the combustion device 100) using the first gas mixture containing the oxygen gas and the inert gas as a carrier.

The combustion device 100 further includes a second gas supply means 14 for supplying the second gas mixture containing a flammable gas, an oxygen gas, and an inert gas to the combustion device 100 (inside the combustion container 10 of the combustion device 100). FIG. 2 shows a case where the second gas supply means 14 supplies of LPG, the air, and an additional nitrogen gas.

The combustion device 100 may further include a third gas supply means for supplying the third gas mixture containing an oxygen gas and an inert gas, or an inert gas, for controlling oxygen diffusion to the Si powder, to the combustion device 100 (inside the combustion container 10 of the combustion device 100). FIG. 2 shows a case where a third gas supply means 15 supplies of a mixture of air and an additional nitrogen gas.

The combustion device 100 may further include protect gas supply means 16 and 17 for supplying protect gases for the purpose of reducing radiant heat to a furnace wall or the like. FIG. 2 shows a case where the third gas supply means 16 and 17 supply mixtures of the air and an additional nitrogen gas.

The combustion device 100 further includes a collecting chamber 23 for collecting a produced silicon monoxide (SiO) powder 24 at a lower part.

In the production of the inventive SiO powder, the SiO powder can be produced by using such combustion device 100. That is, from the upper center part of the combustion device 100, by the supply means 11 for supplying the metal silicon (Si) powder, and by the first gas supply means 12, the Si powder is supplied together with the air stream of a carrier gas composed of the first gas mixture (air and additional nitrogen gas in the example shown in FIG. 2) (operation A). At this time, the Si powder can have a size of, for example, approximately #200 mesh. The second gas mixture (flammable gas composed of LPG, air and an additional nitrogen gas in the example shown in FIG. 2) is supplied from the concentric outer periphery of the supply means 11 and 12. Along with these supplies, a tip of the burner 13 ignites to form a flame 21. In the flame 21, the Si powder is oxidized, then produced SiO gas is quenched and solidified at a lower part of the device to produce the SiO powder (operation B). Depending on an amount of the Si powder supplied, the third gas mixture containing an oxygen gas and an inert gas (air and an additional nitrogen gas in the example shown in FIG. 2) is supplied as necessary (operation C). These operations A and B are simultaneously performed, or the operations A to C are simultaneously performed. Thereby, production speed of the SiO powder and flame control are both successfully achieved to produce the SiO powder stably.

In the production of the inventive SiO powder, the operation B, in which the second gas mixture containing the flammable gas, the oxygen gas (combustion supporting O₂ gas), and the inert gas is supplied to the combustion device to form a flame, is a main heat generation source for oxidizing the Si powder. Along with the operation B, the operation A, in which the Si powder (Si fine powder) serving as a raw material is supplied to the combustion device using the first gas mixture containing the oxygen gas (combustion supporting O₂ gas) and the inert gas as the carrier, is also performed in the same combustion device. While heat generated by oxidation of the Si powder with the oxygen gas is also added, the temperature is raised to the SiO gas temperature region described above, thereby producing SiO.

### Operation A

In the operation A, the reason why using the gas mixture (first gas mixture) containing the inert gas other than the combustion supporting O₂ gas as the carrier is to control the oxidation reaction of the Si powder. If the carrier gas only contains the combustion supporting O₂ gas, the explosive oxidation reaction may instantly occur to produce SiO₂. Therefore, by using the gas mixture containing the combustion supporting O2 gas and the inert gas, the speed of the oxidative heat generation reaction is controlled by reducing the O2 concentration, thereby facilitating the production of SiO. For stopping the reaction at the step in which SiO is produced before production of SiO₂, the O₂ concentration is required not to exceed the explosion limit oxygen concentration of 10%. As the first gas mixture, it is desirable to use a gas mixture of O₂ and N₂, or a gas mixture of O₂ and Ar, in which an amount ratio of the components is controlled. The finer the metal Si powder to be introduced, the more desirable itr is. However, too fine powder causes surface oxidation, increasing a process cost and increasing a risk of a dust explosion, so the powder of about 100 mesh under, desirably 200 mesh under is fine.

### Operation B

As described above, the operation B is an operation for supplying the gas mixture (second gas mixture) containing a flammable gas, an oxygen gas (combustion supporting O₂ gas), and an inert gas, to form a flame. This operation is a main heat supply process for producing SiO from Si. In a case where the air is used as the gas mixture (first gas mixture) in the operation A, O₂ for producing SiO is insufficient. In such case, a quantity of heat is adjusted by the gas mixture (second gas mixture) containing the flammable gas and the oxygen gas (combustion supporting O₂ gas) in the operation B. Furthermore, in the operation B, the inert gas is also added for adjusting and controlling the production speed of SiO similarly as in the operation A. The inert gas used herein may be, for example, nitrogen or argon contained in the air.

The flammable gas may be a hydrocarbon gas such as CH₄ and LPG (liquefied natural gas). Needless to say, the hydrocarbon gas is not limited thereto. Hydrocarbons such as methane, ethane, propane, acetylene, and propylene are preferred because sufficient combustion heat generation can be obtained but is not limited thereto. The flammable gas may be hydrogen (hereinafter referred to as H₂) or a gas mixture containing H₂ and hydrocarbon. The ratio and the like may be determined such that a quantity of heat generation in the flame, or a flame shape such as flame length may be adopted to produce SiO. The operation B is an essential process for forming the flame, causing the reaction of the Si powder with the O₂ gas in the flame, to form SiO. In the operation B, the size of the flame is made as big and long as possible, thereby oxidizing the Si component as slow as possible in the flame while performing control, to produce SiO. It is important to perform the reaction of the Si component and oxygen gas under the condition that SiO powder is produced. In other hand, it is necessary to cause the oxidation reaction by controlling the O₂ concentration in the flame within the range that SiO is produced. The control of oxidation reaction is performed by, in particular, adjusting the ratio between an amount of the Si powder supplied to the combustion device and an amount of the oxygen gas (total amount of oxygen gas contained in the first gas mixture and oxygen gas contained in the second gas mixture). Moreover, it is preferable to perform the control of oxidation reaction by optimizing a mixing ratio or type of the flammable gas (hydrocarbon gas, H₂, and the like) and a mixing ratio of the flammable gas, the oxygen gas (combustion supporting gas), and the inert gas. That is, an adequate amount of O₂ in the flame changes depending on the amount of Si supplied, the type and flow rate of the flammable gas, or the like. Thus, adjustment of these production conditions may be performed experimentally.

### Operation C

As described above, it is necessary to optimize the gas ratio of the second gas mixture in the operation B depending on the amount of the Si powder supplied. However, the optimal gas ratio and optimal flame may not be achieved simultaneously. More specifically, optimizing flame is to lengthen the flame as long as possible. In the present invention, SiO is produced by dropping the Si powder in the flame while controlling the oxidation. However, the length of flame, temperature distribution, and control of the oxygen amount may not be optimized simultaneously. In such case, oxidation speed in the operation B can be controlled by the operation C, in which O₂ and the inert gas, or the inert gas is supplied for controlling oxygen diffusion to the Si powder. Specifically, the method for producing the inventive SiO powder may further include the operation C for supplying, to the combustion device, the third gas mixture containing the oxygen gas and the inert gas, or the inert gas, for controlling oxygen diffusion to the SiO powder. When the amount of the Si powder supplied is small, naturally, the amount of O₂ required may be small. In that case, if the amount of combustion supporting O₂ gas is reduced in the operation B, the flame cannot be optimized. Thus, in the operation B, the flame is maintained by adjusting the gas mixture within the adjustable range. In the operation C, the gas mixture, in which the ratio between the O₂ gas and the inert gas is adjusted such that the O₂ gas is less (amount of O₂ gas is smaller) than the inert gas, is supplied. When the amount of the Si powder supplied is large, conversely, the ratio between the O₂ gas and the inert gas is adjusted such that the O₂ gas is richer (the amount of O₂ gas is larger) than the inert gas in the operation C.

The supply of the protect gas from the protect gas supply means 16 and 17 is also a part of the operation C for supplying the third gas mixture containing an oxygen gas and an inert gas, or an inert gas, for controlling oxygen diffusion to the SiO powder.

In addition, when the flame 21 can be generated and maintained stably, for example, it can be horizontal or angled and still be applicable to the present invention. The amount and composition of the carrier gas in the operation A; the ratio and amount of the flammable gas : the combustion supporting O₂ gas : the inert gas in the operation B; the ratio and amount of the combustion supporting O₂ gas : the inert gas in the operation C, may be adjusted optimally according to the amount of the Si powder supplied so as to occur production reaction of SiO in the flame in a controlled manner. In addition, the SiO powder, which comes out of the flame 21 and is quenched and solidified, is transferred to another room with the carrier gas and collected. The collecting chamber is kept at room temperature and not affected by heat from the upper center of flame 21; consequently, the rapid solidification of metal Si powder (#200 mesh) from the gaseous state is maintained, and SiO in the amorphous state is obtained. A collecting chamber 23 may collect all SiO powder or may collect a powder of the desired particle diameter by cyclone collection. These may be determined, for example, according to the characteristics when applied to LIBs.

Owing to the present invention, the SiO powder can be efficiently produced by the oxidation reaction of Si in an air stream. Such oxidation reaction can produce the SiO powder with very high productivity compared with the conventional solid phase contact reaction method. In particular, a SiO negative electrode material with a low degree of disproportionation can be efficiently produced. Thus, the SiO material suitable as a negative electrode material for the LIB (lithium-ion battery) can be obtained. The SiO powder produced by the production method of the present invention can be used as the negative electrode material for the lithium-ion secondary battery, in addition to glass, plastic coating, or other applications. Furthermore, the obtained SiO powder can be widely used as a high-capacity negative electrode material in mobile devices such as smartphones or smartwatches and as a battery for electric automobiles.

A disproportionation reaction is described, which is important for using the inventive SiO as the LIB negative electrode material. In general, a quenched and solidified SiO is in a non-equilibrium state, and when maintained at a temperature of 800°C or more for a certain period of time, for example, the disproportionation reaction progresses gradually in SiO as shown below, and the phase transitions to a more stable phase. According to the following reaction formula, an internal structure of SiO is not separated into Si and SiO₂ as a macrostructure, but the SiO internal structure is a fine structure with mixed phases of sub um size even if it proceeds to the final phase. The higher the temperature maintained and the longer the time maintained, the more the disproportionation reaction proceeds.

SiO (amorphous) → Si (up to nm size)+Si-O (nonequilibrium phase) → Si+SiO₂ (final phase) (3)

A fine Si ratio in SiO and cycle characteristics in which SiO is used for the LIB negative electrode material have a relation of an inverse proportion, thus it is desirable to use the SiO material having no disproportionation or low disproportionation as much as possible. For example, the degree of disproportionation can be judged by a peak height and area of a Si main peak 2Θ ~ 28° in the XRD measurement of the SiO powder (FIG. 3). The SiO of the present invention is composed of a broad pattern with a low angle (near to 2θ=22°) and a broad pattern near to 2θ=50° as shown in a reaction product pattern in an XRD chart of FIG. 3 and there is no reflection peak indicating a crystal phase. That is, it can be determined that SiO is in an amorphous state from an XRD pattern. On the other hand, it is extremely difficult to quantify the degree of SiO disproportionation because SiO disproportionation progresses gradually from precipitation of fine Si in nm-size or less (roughly nm size) upon heating. Consequently, the peak height and area of 2Θ ~ 28° are used to make a qualitative judgment. When the disproportionation has completely progressed to Si and SiO₂ phase, Li cannot transmit through the SiO₂ phase, so it is unsuitable as the negative electrode material. Since the SiO of the present invention does not risk passing through a high-temperature state after production and solidification, it maintains a low degree of disproportionation in the amorphous state, which is a desirable state for the LIB negative electrode material. The XRD chart of the reaction products thereof and the reaction products with heat treatment under different conditions is shown in FIG. 3.

As described above, when the composition of SiOx produced is represented, SiOx in the range of 0.8≤X≤1.2 can be obtained depending on the production conditions, but the amorphous state is maintained as the negative electrode material for the LIB, and desirable characteristics can be obtained within this range. In case of X<0.8, SiOx is Si-rich and energy density is improved, however, it is undesirable because it is easy to disproportionate and the expansion and contraction rate during charging and discharging increases, resulting in degrading the cycle characteristics. In the case of 1.2<X, the ratio of SiO₂ in SiO is increased, and energy density is decreased. Thus, it is undesirable because the mobility of Li in the SiO negative electrode material is decreased.

The SiO negative electrode material of the present invention shows excellent cycle characteristics and has four times or more energy density relative to a graphite electrode material; however, the SiO material intact has no conductivity, and the first-time efficiency is as low as about 70%, which is a problem as the negative electrode material. To improve the conductivity, making the negative electrode active material for the lithium-ion secondary battery having the surface of SiO powder coated with a conductive film is preferable. For example, it is desirable to coat the SiO material surface with conductive carbon by a thermal decomposition CVD of hydrocarbon gas (methane, ethane, butane, propane, propylene, acetylene, or the like). The conductive carbon having up to 10 nm or more is sufficient, and it is desirable that an entire surface of the SiO powder is coated (FIG. 4). Needless to say, the conductive coating is not limited to the carbon coating by the heat CVD. For example, pitch coating or coating with a conductive material is also possible, as long as there is sufficient conductivity and adhesion for coating and the disproportionation of the SiO material is not developed. FIG. 4 shows C layer thickness (roughly 40 nm) in this example.

In SiO, there are some Si and O with spare atomic bonding (dangling bonds). When Li is inserted for charging, there is a certain ratio of Li which bonds with these dangling bonds not coming out from the SiO negative electrode material during discharging and does not contribute to discharging. A capacity ratio between a first-time charge and discharge capacity is called a first-time efficiency, which is approximately 70 %. In the LIB battery, extra positive electrode material being loaded is needed to compensate for the amount of Li that does not contribute to charging and discharging. To improve this, pre-doping the conductive coated SiO negative electrode material of the present invention with Li in advance outside of the battery to improve the first-time efficiency is effective in increasing the LIB capacity. The Li-doping for SiO has various methods. For example, various Li-doping methods are known, including thermal doping, in which Li metal or Li compounds are mixed with SiO and thermally Li-doped by heating; electrochemical doping, in which SiO is doped with Li outside of the battery by electrochemical methods; and solution doping, in which SiO is doped from Li complexes in solution. The present inventors have found out that the electrochemical doping or the solution doping, in which the Li-doping is enabled while maintaining the low degree of disproportionation of SiO, is desirable for improving the cycle characteristics. To satisfy a requirement for the first-time efficiency of 90% or more, higher energy density, and the cycle characteristics by such a Li-doping, it is essential that the SiO negative electrode material, being a foundation, is low disproportionated. Moreover, it is important to maintain low disproportionation during C-coating and Li-doping processes to make the LIB negative electrode material. By using the Li-doped SiO negative electrode material, the LIB with high energy density and excellent cycle characteristics can be produced.

By combustion oxidation in air stream method for Si powder, which has exceedingly high productivity than the conventional solid phase contact reaction method, SiO having low-disproportionation can be produced, which is desirable as the LIB negative electrode material. Moreover, by using the conductive coating material to SiO of the present invention, the LIB having high cycle characteristics can be realized. Furthermore, by using the negative electrode material, in which SiO-C coating material of the present invention is Li-doped, a battery capacity of the LIB can be efficiently improved proportionally to SiO addition ratio.

### EXAMPLE

Hereinafter, the present invention will be specifically described with reference to Examples and Comparative Example. However, the present invention is not limited thereto.

### [Example 1]

In order to produce the inventive SiO powder, SiO powder was produced using a combustion reaction device (FIG. 2). The conditions in the case are shown below. The combustion gas for operation B was LPG, the air was used as a gas mixture of the combustion supporting O₂ and the inert gas, and O₂ and the inert gas in operation C were also the air. Metal Si powders supplied were 2.0 kg/hr, 2.2 kg/hr, 2.5 kg/hr, and 2.7 kg/hr, respectively, while the flow rates of LPG gas were adjusted in a range of 0.8 m³/hr to 1.1 m³/hr according to the amounts of Si powders supplied. An amount of carrier gas, and O₂ and the inert gas in process C were also adjusted.

In order to obtain "x", the ratio of SiOx, SiOx was dissolved using carbonic acid Na to produce SiO₂ precipitate, total Si was obtained by summing Si obtained by the gravimetric method from SiO₂ precipitate and the dissolved Si in the filtrate. An amount of O was calculated on the basis of Si. When a composition of the SiO powder produced was measured, a value of "x" of the SiO powder represented by a composition formula of SiOx was 1. An investigated X-ray powder diffraction (XRD) chart of the SiO powder produced shows only broad amorphous state reflection as shown in "the inventive silicon monoxide powder" of FIG. 1, and no sharp reflection peaks due to crystalline material are observed. This indicates the low disproportionation of SiO. An XRD figure of disproportionation SiO by a conventional solid phase contact reaction method (having a peak due to a crystal phase of silicon around 2θ=28°) is shown for comparison.

From FIG. 1, all SiO powders in this Example can be determined that disproportionation has not taken place from the XRD chart. The surfaces of the SiO powders were coated by carbon films (conductive coating) by a CVD method, in which LPG gas was thermally decomposed at 800°C. As shown in FIG. 4, it is confirmed that a thin C film of about up to 40 nm was formed.

A negative electrode was formed from a mixed powder, i.e., a negative electrode active material, made by mixing a graphite negative electrode material (hereinafter, described as Gr) (90 mass%) and SiO (10 mass%) that was coated with the carbon film as described above. A pouch-type lithium-ion secondary battery was made with an NCA (nickel cobalt aluminum) positive electrode. The cycle characteristics of the LIB were investigated under the following conditions.
Cell type: 543436
Cutoff voltage: 4.3V, 2.5 V
Charging method: CCCV 0.7 ITA
Discharging method: CC 0.5 ITA
Electrolyte: 1M LiPF₆/EC (ethylene carbonate):DMC (dimethyl carbonate) (3:7 volume % ratio) VC (vinylene carbonate) 1 volume %
Temperature: 25°C

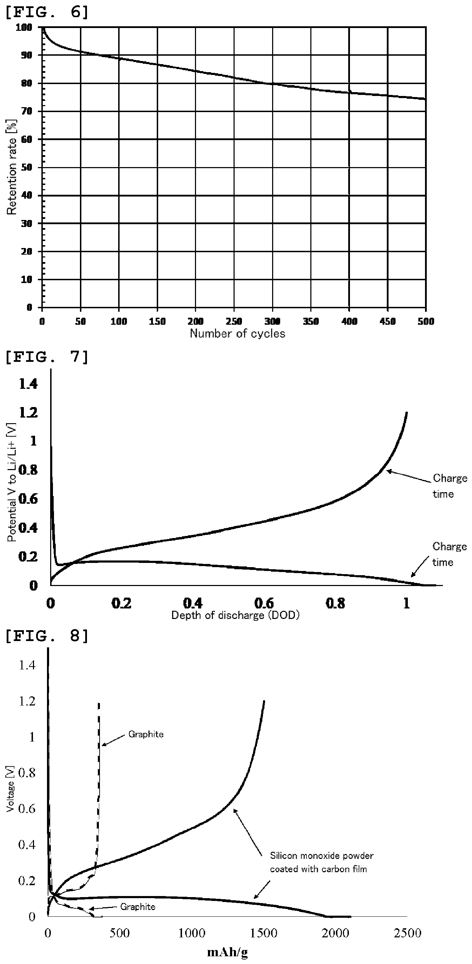

As a result, as shown in FIG. 6, excellent cycle characteristics were obtained with a capacity retention rate of 75% at 500 cycles. A first-time efficiency of SiO-C calculated from a mixing ratio of Gr/SiO-C was 68 %.

### [Example 2]

A C film was formed on SiO obtained under the same conditions as in Example 1 by propane gas CVD, as well as in Example, and the SiO/C coated negative electrode material was made. In addition, the SiO/C powder was electrochemically doped with Li metal as a counter electrode outside of a battery. A first-time efficiency of the negative electrode was investigated in a pouch-type LIB battery with the same conditions as in Example 1, using Gr and Li-doped SiO/C (20 % mixture) as the negative electrode material. The result is shown in FIG. 7. As shown in FIG. 7, a high efficiency of 92 % was obtained from conversion in terms of Li-doped SiO/C (charge capacity: 1554 mAh/g, discharge capacity: 1439 mAh/g). A SiO material that was not Li-doped had a first-time efficiency of approximately 70 %. Thus, a significant improvement of 20 % or more was achieved. Since a first-time efficiency of a typical graphite negative electrode is up to 95 %, the initial efficiency of SiO material was close to that of the graphite negative electrode. Cycle characteristics of the same pouch-type LIB battery as in Example 1 were also investigated, and excellent cycle characteristics were obtained with a capacity retention rate of 82 % at 800 cycles.

### [Comparative Example 1]

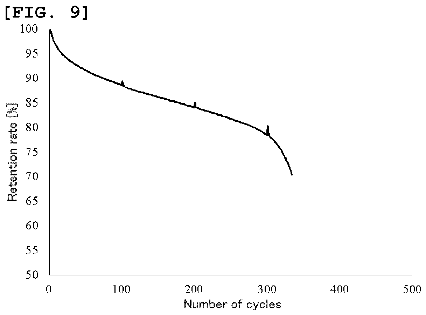

SiO was produced by the conventional Si and SiO₂ contact solid phase reaction, and the SiO was pulverized to make SiO material. As in Example 1, when a composition of a SiO powder produced was measured, a value of "x" of the SiO powder represented by a composition formula of SiOx was 1. Methane gas was thermally decomposed at 1,000°C on a surface of the SiO material to form a C conductive coating film. Charging and discharging characteristics of a SiO single negative electrode were investigated in a button cell having a Li counter electrode (FIG. 8). Charging and discharging curve of a graphite negative electrode is also shown for comparison. A first-time efficiency of the SiO-C single negative electrode was up to 71.5 % (charge capacity: 2101 mAh/g, discharge capacity: 1502 mAh/g), while a first-time efficiency of the graphite negative electrode was about 95 %, which was very high efficiency (charge capacity: 372 mAh/g, discharge capacity: 353 mAh/g). The higher first-time efficiency of the SiO-C in this Comparative Example than that of the low-disproportionated SiO-C negative electrode material in Example 1 was due to the reduction of the Li trap site by the progress of disproportionation in SiO caused by the thermal history during production and deposition of SiO and the applied temperature during thermal CVD. Such partial first-time efficiency increase is generally observed phenomenon when SiO is used, in which disproportionation is occurring. In addition, a pouch-type LIB was produced with a Gr+SiO-C (10 %) negative electrode under the same condition as in Example 1, then cycle characteristics were investigated (FIG. 9). The cycle characteristics of a SiO negative electrode LIB of this Comparative Example sharply deteriorated from 300 cycles onwards. Although heat is not applied to the LIB battery thereto during cycle tests, disproportionation in SiO generally progresses with each charging and discharging cycle. Rapid deterioration of the cycle characteristics at over 300 cycles in FIG. 9 is estimated to be due to the rapid progress of reaction degradation with electrolytes caused by the progress of disproportionation. Thus, a negative electrode active material using the SiO powder of the conventional method has a slightly higher first-time efficiency, but the cycle characteristics deteriorate.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A silicon monoxide powder comprising silicon monoxide, wherein
in an X-ray diffraction spectrum of the silicon monoxide powder measured by X-ray diffraction by using a Cu-Kα ray,
broad peaks due to an amorphous phase are near 2Θ = 22° and near 2θ = 50°, and
a peak due to a crystal phase of silicon is not near 2Θ = 28°.

2. The silicon monoxide powder according to claim 1, wherein
"x" is in the range of 0.8 ≤ X ≤ 1.2 when the silicon monoxide is represented by the composition formula of SiOₓ.

3. The silicon monoxide powder according to claim 1 or 2, wherein
the silicon monoxide powder is produced by oxidizing a metal silicon powder as a raw material by using the reaction heat of oxygen gas with a flammable gas in an air stream as an energy source.

4. A negative electrode active material for a lithium-ion secondary battery, wherein
the silicon monoxide powder according to any one of claims 1 to 3 is coated with a conductive film on a surface.

5. The negative electrode active material for the lithium-ion secondary battery according to claim 4, wherein
the silicon monoxide powder is doped with lithium.

6. A negative electrode for a lithium-ion secondary battery comprises the negative electrode active material for the lithium-ion secondary battery according to claim 4 or 5.

7. A lithium-ion secondary battery comprising:
the negative electrode for the lithium-ion secondary battery according to claim 6;
a positive electrode;
a non-aqueous electrolyte; and
a separator.
